Europäisches Patentamt

European Patent Office

Office européen des brevets

(11) Numéro de publication : **0 302 778 B1**

# (12) FASCICULE DE BREVET EUROPEEN

(45) Date de publication du fascicule du brevet :
30.10.91 Bulletin 91/44

(51) Int. Cl.⁵ : **G01N 22/04**

(21) Numéro de dépôt : **88401985.2**

(22) Date de dépôt : **29.07.88**

(54) **Dispositif de mesure en continu du taux d'imprégnation par une substance de fibres conductrices ou non d'électricité.**

(30) Priorité : 04.08.87 FR 8711059

(43) Date de publication de la demande :
08.02.89 Bulletin 89/06

(45) Mention de la délivrance du brevet :
30.10.91 Bulletin 91/44

(84) Etats contractants désignés :
BE CH DE ES GB IT LI NL SE

(56) Documents cités :
EP-A- 0 011 185
FR-A- 2 386 033
FR-A- 2 529 340
FR-A- 2 556 470
PATENT ABSTRACTS OF JAPAN, vol. 9, no.
141 (P-364)[1864], 15 juin 1985, page 18 P 364;
& JP-A-60 20 138 (NIHON DENKI GLASS K.K.)
01-02-1985

(73) Titulaire : **Société Nationale Industrielle Aérospatiale Société anonyme dite:**
**37 Bld de Montmorency**
**F-75016 Paris (FR)**

(72) Inventeur : **Lacombe, Jean Francis**
**96, rue Anatole France**
**F-33160 Saint Medard en Jalles (FR)**
Inventeur : **Miane, Jean Louis**
**Les Terrasses - Bâtiment 5F**
**F-33400 Talence (FR)**

(74) Mandataire : **Mongrédien, André et al**
**c/o SOCIETE DE PROTECTION DES INVENTIONS 25, rue de Ponthieu**
**F-75008 Paris (FR)**

## Description

La présente invention a pour objet un dispositif pour la mesure en continu du taux d'imprégnation par une substance, suffisament visqueuse de fibres conductrices ou non de l'électricité utilisant une cavité hyperfréquence.

Elle s'applique en particulier dans le domaine de la fabrication de matériaux composites formés de fibres conductrices par exemple en métal ou en carbone ou de fibres non conductrices notamment en verre, Kevlar, silice, alumine, imprégnées par des résines (polyester, époxy, etc.) durcies par polymérisation et/ou réticulation. Ces matériaux composites sont utilisés pour la réalisation de pièces employées en particulier dans les domaines automobiles aéronautiques et spatiaux (navette, aéronef).

Dans le domaine des matériaux composites, on utilise très fréquemment des fils ou des fibres pouvant se présenter sous forme de films ou de bandes minces et étroites qui doivent être imprégnés de résine polymérisable, la nature de celle-ci dépendant des applications envisagées.

Le taux d'imprégnation varie selon les utilisations de 20 à 40%, ce taux étant défini par le rapport de la masse de résine, pour une longueur de fibres donnée, à la masse totale de la fibre imprégnée. Pour une application particulière, le taux d'imprégnation doit être déterminé avec précision et doit demeurer dans des tolérances aussi serrées que possible et constant d'un bout à l'autre de la fibre.

Dans le document FR-A-2556470, il est décrit un procédé et un dispositif de mesure en continu du taux d'imprégnation de fibres conductrices par de la résine, utilisant une cavité hyperfréquence. Le principe général de la mesure est basé sur les perturbations d'une cavité résonnante micro-onde dues à l'introduction dans la cavité résonnante d'une fibre conductrice.

A cet effet, le procédé de mesure consiste à faire défiler la fibre conductrice imprégnée de résine à travers la cavité hyperfréquence, selon une direction orthogonale au champ électrique micro-onde dans la cavité, et à mesurer en continu les variations de la puissance micro-onde en sortie de la cavité. Ces variations sont dans une certaine plage de mesure, proportionnelles au taux d'imprégnation de la fibre par la résine.

Le procédé et le dispositif illustrés dans ce document ont l'inconvénient d'être spécifiques et uniquement capables de mesures sur des fibres conductrices. Ils ne permettent pas de réaliser avec un même appareillage fixe, des mesures "mixtes", c'est-à-dire indifféremment sur des fibres conductrices de l'électricité ou sur des fibres non conductrices de l'électricité.

Par ailleurs, la source micro-onde présente à long terme des dérives thermiques gênant considérablement la mesure. En effet, les dérives en fréquence de la source micro-onde se traduisent par des variations du niveau de la puissance transmise par la cavité, variations indépendantes des propriétés de la fibre imprégnée à contrôler ; autrement dit la dérive en fréquence de la source introduit des dérives dans la mesure du taux d'imprégnation et donc des erreurs de mesures.

Par ailleurs, on connaît par le document EP-A-0011185, dans un domaine différent de celui de l'invention, un appareil de mesure de la teneur en eau de substances isotropes, non conductrices électriquement, utilisant aussi la mesure par perturbations d'une cavité résonnante micro-onde. La cavité utilisée est une cavité à section rectangulaire.

La mesure est effectuée sur des échantillons traversant la cavité micro-onde selon une direction parallèle au sens du champ électrique micro-onde dans la cavité.

Ces échantillons sont des prélèvements de poudres de granulats, de pâtes ou de liquides, ce qui ne permet pas une mesure en continu in situ, c'est-à-dire directement sur le site de fabrication des matériaux sur lesquels a été effectué le prélèvement.

En outre, la cavité résonnante fonctionne dans différents modes de résonance selon la mesure à effectuer du type $TE_{01n}$ (avec n un entier positif) ; en effet, à chaque mode correspond une fréquence de mesure ainsi qu'une gamme d'humidité mesurable.

Ce dispositif de mesure de l'humidité sur des échantillons non conducteurs comporte avantageusement des moyens de stabilisation en fréquence de la source micro-onde, évitant la dérive des mesures au cours du temps.

Malheureusement, ce dispositif ne permet pas la mesure de matériaux conducteurs. En effet, dans une cavité résonnante à section rectangulaire, il n'existe pas de composante du champ électrique résonnant de la cavité, orientée perpendiculairement à l'échantillon à analyser. La cavité résonnante travaille donc toujours avec un champ électrique orienté parallèlement à l'échantillon.

En outre, l'utilisation d'une cavité résonnante à section rectangulaire présente un coefficient de qualité faible limitant la sensibilité du dispositif de mesure.

La présente invention a pour objet un dispositif permettant de mesurer en continu le taux d'imprégnation par une substance de fibres, indifféremment conductrices ou non conductrices de l'électricité, utilisable industriellement. En particulier, ce dispositif est capable de mesure avec une bonne précision sur des fibres conductrices ou non en conservant le même positionnement mécanique par rapport au défilement en continu des fibres dans la cavité hyperfréquence.

Par ailleurs, ce dispositif permet de s'affranchir des dérives en fréquence de la source micro-onde, d'améliorer la stabilité du signal de mesure.

De façon plus précise, l'invention a pour objet un dispositif de mesure en continu du taux d'imprégnation par une substance quelconque d'une fibre, comportant une source micro-onde, une cavité résonnante à section circulaire excitée selon un mode résonnant $TE_{11n}$, avec n un nombre impair supérieur à 1, et susceptible d'être couplée à la source micro-onde via un premier guide d'onde, la cavité étant pourvue d'un axe de symétrie parallèle à une première direction (x) et d'un passage pour la fibre, traversant la cavité en son milieu et orienté parallèlement à une seconde direction (y) perpendiculaire à la première direction, un détecteur de la puissance micro-onde transmise par la cavité, susceptible d'être couplé à cette dernière via un second guide d'onde et transformant cette puissance en un signal électrique, des moyens de traitement du signal électrique pour en déduire le taux d'imprégnation et des moyens d'affichage du taux d'imprégnation ; ce dispositif se caractérise en ce que la cavité comporte (a) une première entrée et une première sortie des micro-ondes, orientées parallèlement à une troisième direction (z) perpendiculaire aux première et seconde directions (x, y), ces premières entrée et sortie étant destinées à être connectées respectivement aux premier et second guides lorsque la fibre est conductrice, afin que la première composante ($\vec{E1}$) du champ électrique du mode résonnant $TE_{11n}$, orientée selon la troisième direction, soit perpendiculaire à la fibre conductrice, (b) une seconde entrée et une seconde sortie des micro-ondes, orientées parallèlement à la seconde direction, ces secondes entrée et sortie étant destinées à être connectées respectivement aux premier et second guides lorsque la fibre est non conductrice, afin que la seconde composante ($\vec{E2}$) du champ électrique du mode résonnant $TE_{11n}$, orientée selon la seconde direction, soit parallèle à la fibre non conductrice, et (c) un filtre de mode pour éliminer de la cavité résonnante ladite première composante ($\vec{E1}$) du champ électrique lorsque la fibre est non conductrice.

Ce dispositif permet de maîtriser le processus de fabrication de fibres imprégnées, en réalisant notamment un asservissement du taux d'imprégnation des fibres, ainsi que d'assurer un suivi en temps réel du contrôle qualité du matériau composite formé à partir de ces fibres.

L'utilisation d'une cavité cylindrique selon l'invention, son fonctionnement sur un seul mode de résonance $TE_{11n}$, son double ensemble d'accès et de sorties des micro-ondes, ainsi que l'utilisation du filtre de mode permettent de conserver un même positionnement mécanique fibre/cavité pour des mesures en continu sur des fibres conductrices ou non de l'électricité.

Dans le cas de modes résonnants $TE_{11n}$ d'une cavité à section circulaire, une même entrée excite simultanément deux modes $TE_{11n}$ résonnants ayant des polarisations ou composantes différentes, notées $\vec{E1}$ et $\vec{E2}$, ce qui n'est pas possible avec une cavité à section rectangulaire. Mais le couplage entre l'onde excitatrice incidente et les polarisations $\vec{E1}$ et $\vec{E2}$ n'est pas le même.

L'utilisation de deux entrées micro-ondes distinctes et, parallèlement, de deux sorties distinctes, permet de conserver un couplage correct selon la polarisation utilisée lors de la mesure du taux d'imprégnation.

Une cavité cylindrique présente, comme autre avantage par rapport à une cavité à section rectangulaire, un coefficient de qualité plus important, conférant au dispositif de mesure une meilleure sensibilité.

L'utilisation conformément à l'invention d'un filtre de mode a pour effet de supprimer la polarisation $\vec{E2}$ indésirable lors de la mesure du taux d'imprégnation d'une fibre non conductrice.

Pour que le filtre de mode soit efficace, il doit être réalisé en un métal de conductivité électrique aussi grande que possible, et en particulier réalisé en cuivre, en argent ou en or ou éventuellement en un métal quelconque revêtu d'un dépôt d'or ou d'argent de quelques micromètres d'épaisseur.

Sa forme doit être celle d'un fil rigide aussi fin que possible, ayant un diamètre allant de 0,5 à 1 mm pour conserver une certaine rigidité mécanique, pénétrant dans la cavité micro-onde. Ce fil conducteur est placé suivant un des diamètres de la cavité résonnante et orienté perpendiculairement à la première composante $\vec{E1}$ du champ électrique que l'on désire conserver, soit parallèlement à la troisième direction. En outre, il doit être placé en un maximum du champ électrique du mode résonnant, soit pour un mode $TE_{113}$ au 1/6 de la longueur de la cavité, d'un côté ou de l'autre du passage destiné aux fibres.

Avantageusement, la pénétration du filtre de mode dans la cavité est de l'ordre du rayon de la cavité. Toutefois, ceci n'est pas critique.

Selon l'invention, la cavité hyperfréquence est réalisée en métal. Afin que cette cavité présente un coefficient de qualité le plus grand possible, celle-ci est soit formée dans un bloc massif en un métal bon conducteur de l'électricité (laiton, Cu) soit dans un bloc en un métal quelconque, les parois internes du bloc étant alors revêtues d'un film très conducteur poli, en or ou en argent.

La cavité résonnante fonctionne sur un seul mode $TE_{11n}$ avec n valant 3, 5, 7, 9. De préférence n est choisi égal à 3.

Afin d'éviter des dérives en fréquence de la source micro-onde et donc des erreurs dans la mesure, des moyens de stabilisation en fréquence de la source micro-onde sont prévus. Ces moyens peuvent par exemple être constitués par un asservissement en fréquence comportant une boucle de référence raccordée à une chaîne de contrôle automatique de la fréquence de la source afin d'asservir la tension de commande de ladite source, la boucle de référence comportant une cavité de référence et un détecteur de référence.

Mais cette solution est lourde, car elle nécessite une deuxième cavité de référence, associée à un second système de détection.

Une autre solution consiste à utiliser un générateur de fonction délivrant une tension en dents de scie entraînant une modulation de la fréquence de la source, autour de la fréquence de résonance de la cavité perturbée sur un intervalle de fréquence qui doit être très grand devant la largeur à mi-hauteur du pic de la courbe de résonance donnant les variations de la puissance micro-onde transmise par la cavité perturbée en fonction de la fréquence d'excitation de la cavité.

Le détecteur de la puissance micro-onde est en particulier une diode "contact" micro-onde ou diode Schottky. Du fait de la modulation en fréquence de la source micro-onde conformément à l'invention, le signal électrique issu du détecteur doit tout d'abord être traité par un circuit électronique transformant ce signal en un signal continu moyen.

Lorsque ce circuit électronique est un filtre, le signal continu moyen obtenu P2(t) est la corrélation de la puissance transmise à la résonance par la cavité perturbée, notée P1(t), par la fonction de filtrage F(t).

A la place du filtre, on peut utiliser un amplificateur détecteur de crête. Dans ce cas, le signal P2(t) continu moyen obtenu est proportionnel au signal P1(t).

L'utilisation d'un générateur de tension en dents de scie permet de ne plus être gêné par la dérive en fréquence de la source micro-onde et l'association à ce générateur d'un circuit électronique transformant le signal émis par le détecteur en un signal continu moyen permet d'améliorer la stabilité du signal de mesure puisque chaque mesure transmise au système de traitement est déjà une valeur moyenne du signal détecté.

Ce signal continu moyen est ensuite amplifié par un amplificateur, puis transformé en un signal digital par un convertisseur analogique digital avant d'être traité par un micro-processeur afin de transformer le signal digital issu du convertisseur en une valeur du taux d'imprégnation de la fibre conductrice ou non.

Le dispositif de l'invention s'applique à tout type de fibres, ces dernières pouvant avoir la forme de fil cylindrique, de tresse, de film, de bande, etc.. Toutefois, avec des fibres conductrices, on obtient une meilleure sensibilité lorsque celles-ci sont sous forme de film ou de bande.

D'autres caractéristiques et avantages de l'invention ressortiront mieux de la description qui va suivre, donnée à titre illustratif et non limitatif, en référence aux figures annexées, dans lesquelles :

    — la figure 1 représente un synoptique d'un dispositif de mesure conforme à l'invention,

    — la figure 2 donne l'allure des signaux issus respectivement de la source de tension, du détecteur et du circuit électrique transformant le signal du détecteur en un signal continu moyen, en fonction du temps,

    — la figure 3 représente schématiquement un mode de réalisation de la cavité micro-onde du dispositif de la figure 1,

    — la figure 4 est un schéma illustrant la répartition et la disposition du champ électrique micro-onde dans la cavité de la figure 3, et

    — la figure 5 donne des courbes de résonance de la cavité micro-onde de la figure 3 : la courbe I correspond à la résonance de la cavité à vide et la courbe II à la résonance de la cavité perturbée par une fibre imprégnée.

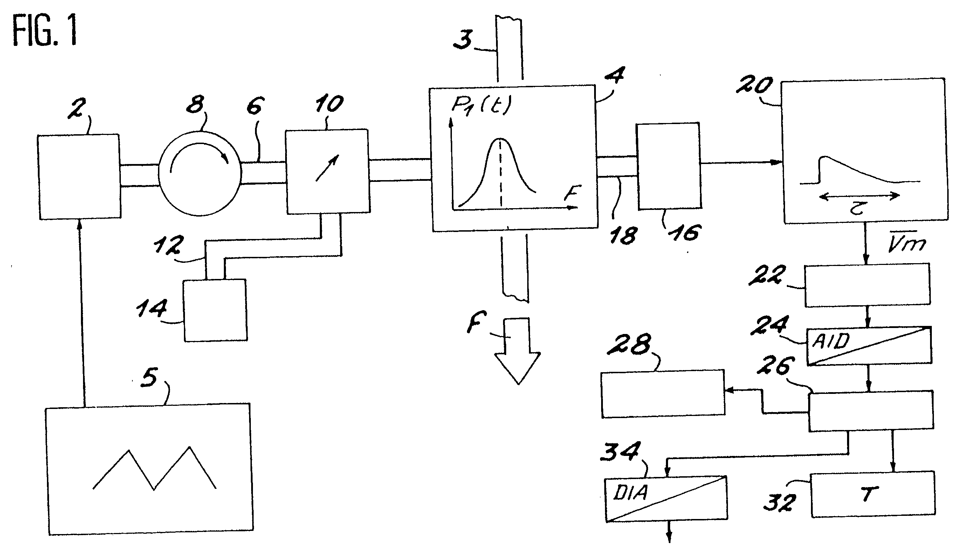

En référence à la figure 1, le dispositif de mesure selon l'invention comporte une source micro-onde 2 constituée par une diode gunn ou un transistor à effet de champ (FET) engendrant des ondes hyperfréquences dont la fréquence peut être modifiée à l'aide d'un varactor. Les micro-ondes utilisées sont en particulier des ondes dont la fréquence varie de 8 à 12 GHz, correspondant à la bande X.

La fréquence des ondes engendrées par la source 2 est voisine de la fréquence de résonance de la cavité hyperfréquence 4 dans laquelle circule en continu une fibre 3, conductrice ou non de l'électricité, préimprégnée de résine polymérisable ; la flèche f indique le sens de circulation de la fibre dans la cavité.

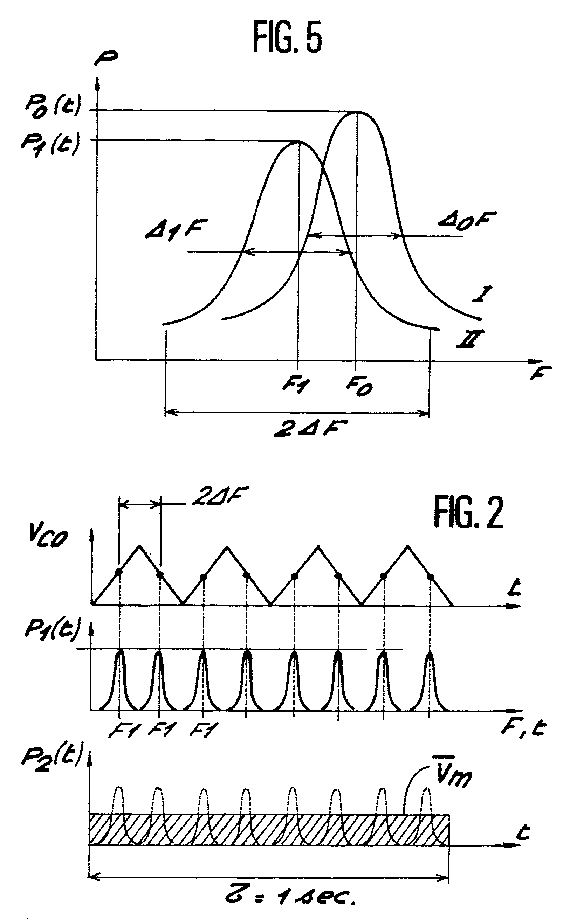

Conformément à l'invention, l'alimentation en tension de la source 2 est assurée par un générateur 5 fournissant une tension en dents de scie Vco telle que représentée sur la figure 2 entraînant une modulation en fréquence de la source micro-onde 2. Cette modulation consiste en un balayage en fréquence sur un intervalle $\Delta 2F$, d'une dizaine de mégahertz, autour de la fréquence de résonance F1 de la cavité résonnante 4 perturbée. Ceci permet d'assurer une stabilisation en fréquence de la source 2 et donc d'assurer une stabilité de la mesure.

Le transport des micro-ondes entre la source 2 et la cavité hyperfréquence 4 est assuré à l'aide d'un guide d'onde 6 souple, constitué par exemple par un câble coaxial. Ce guide d'onde 6 est pourvu d'un isolateur micro-onde 8 du commerce servant à éviter toute perturbation des micro-ondes engendrées par la source 2 par les ondes électromagnétiques externes.

En outre, le guide d'onde 6 est pourvu d'un atténuateur variable 10 permettant de régler la puissance incidente Po(t) des micro-ondes engendrées par la source 2. A cet effet, l'atténuateur 10 de type connu est relié par un conducteur coaxial 12 à un détecteur 14 de la puissance incidente Po(t), formé par exemple par une diode. Le réglage de la puissance incidente se fait manuellement ou automatiquement.

Le dispositif de mesure selon l'invention comprend en outre, un détecteur 16 servant à détecter la puisance micro-onde P1(t) transmise à travers la cavité résonnante 4 perturbée. Cette puissance P1(t) est liée aux propriétés de la fibre imprégnée 3, traversant la cavité. Ce détecteur 16 peut être constitué par une diode contact micro-onde ou une diode Schottky qui peut être couplée à la cavité résonnante 4 à l'aide d'un guide d'onde souple 18, constitué en particulier par un câble coaxial.

Ce détecteur 16 transforme la puissance P1(t) transmise par la cavité hyperfréquence en un signal électrique de même fréquence et de même amplitude. Ce signal électrique est ensuite filtré à l'aide d'un filtre 20 formé par exemple d'un circuit RC ayant une constante de temps $\tau$ de 1 seconde. Le signal continu moyen $\overline{Vm}$ obtenu à la sortie du filtre 20 est donc la convolution de la puissance P1(t) transmise à la résonance par la cavité 4 perturbée par la fonction de filtrage F(t).

L'utilisation d'une tension d'alimentation de la source 2 en dents de scie conduit à l'obtention d'un signal P1(t)t issu de la cavité résonnante 4 puis d'un signal P2(t) en fonction du temps tels que représentés sur la figure 2, qui moyenné dans le temps sur une seconde à l'aide du filtre 20, donne la tension continue $\overline{Vm}$.

Le signal continu moyen $\overline{Vm}$ est ensuite amplifié à l'aide d'un amplificateur 22 puis envoyé sur un convertisseur analogique digital 24 pour être traité par un miniordinateur ou un microprocesseur 26 du type MOTOROLA 6800.

Ce microprocesseur 26 compare la valeur de la tension continue $\overline{Vm'}$ issue du convertisseur 24 à une table d'étalonnage implantée dans une mémoire REPROM 28 et ordonne une prise de données toutes les secondes. Cette table d'étalonnage est établie à partir d'une courbe donnant les variations de la tension continue $\overline{Vm'}$ issue du convertisseur 24 en fonction du taux d'imprégnation T par la résine d'une fibre 3, conductrice ou non de l'électricité, traversant la cavité hyperfréquence 4.

Cette courbe d'étalonnage est fonction des différents éléments du dispositif de mesure. Aussi, toute modification de tel ou tel élément doit nécessiter un nouvel étalonnage.

Le taux d'imprégnation T ainsi déterminé par le microprocesseur 26 peut être visualisé en temps réel sur un écran d'affichage 32 connecté au microprocesseur 26 et envoyé parallèlement sur un convertisseur digital analogique 34 fournissant un signal analogique pouvant par exemple servir pour l'asservissement du système d'imprégnation des fibres par la résine afin d'assurer une imprégnation homogène des fibres, en fonction de leur utilisation ultérieure.

Conformément à l'invention, la cavité hyperfréquence 4 doit pouvoir être utilisée avec des fibres conductrices ou non conductrices indifféremment, et donc dans des situations où le champ micro-onde électrique dans la cavité doit être soit parallèle soit perpendiculaire aux fibres 3 traversant la cavité.

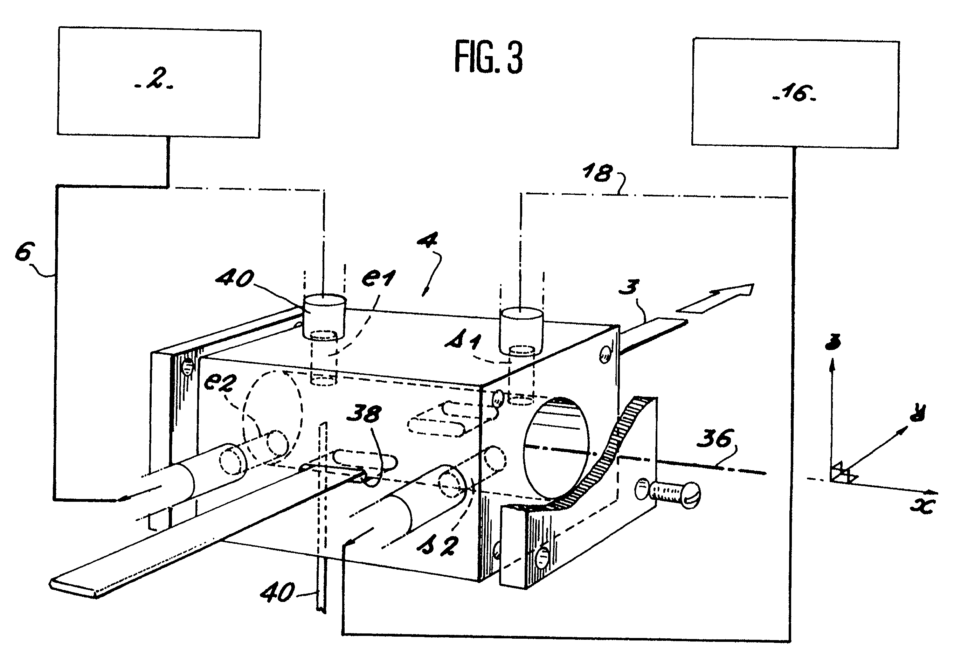

A cet effet, la cavité selon l'invention, telle que représentée sur la figure 3, est une cavité cylindrique à base circulaire dont l'axe de révolution 36 est orienté parallèlement à la direction x du repère orthonormé xyz. Afin d'éviter que toutes les variations de température de l'environnement n'entraînent des modifications de la fréquence de résonance de la cavité 4, cette dernière est réalisée en Invar (alliage de fer et de nickel), avec un revêtement en argent ou cuivre pour obtenir un bon coefficient de qualité Qo à vide au moins égal à 1000.

La cavité 4 est pourvue en son milieu d'un passage 38 pour la fibre 3 dont on veut mesurer le taux d'imprégnation par la résine. Ce passage 38 est rectiligne et orienté parallèlement à la direction Y du repère orthonormé, selon un diamètre de la cavité 4. Ce passage, traversant de part en part la cavité, présente en coupe la forme d'un cercle ou d'une ellipse aplatie selon la forme de la fibre à contrôler ; pour une lame à contrôler de quelques dixièmes de mm et de 3 mm de large, le passage elliptique peut présenter une épaisseur de 3 mm et une largeur de 5 mm. Ce passage 38 des fibres est unique et peut être utilisé aussi bien pour des fibres conductrices que pour des fibres non conductrices.

Un système mécanique, non représenté, du type rouleaux tendeurs, permet le maintien en traction de la fibre 3 ainsi que son guidage dans le passage 38.

La cavité 4 est en outre pourvue d'une première entrée e1 des micro-ondes ayant la forme d'un trou cylindrique dont l'axe de révolution est parallèle à la direction z du repère xyz. Cette entrée e1 est destinée à être couplée, via le guide d'onde 6, à la source micro-onde 2. Associée à cette première entrée e1, on trouve une sortie s1 ayant la forme d'un cylindre dont l'axe de révolution est orienté selon l'axe z du repère xyz, cette sortie étant susceptible d'être couplée, via le guide d'onde 18, au détecteur de puissance 16.

Par ailleurs, la cavité 4 est pourvue d'une seconde entrée e2 et d'une seconde sortie s2 de forme cylindrique dont les axes de révolution sont parallèles à l'axe y du repère xyz, l'entrée e2 étant destinée à être couplée à la source micro-onde 2, via le guide d'onde 6, et la sortie s2 au détecteur 16, via le guide d'onde 18.

Le couplage des entrées e1, e2 et des sorties s1, s2 avec respectivement les guides d'onde 6 et 18 est assuré à l'aide de quatre embases coaxiales 40 standard du type SMA micro-ondes.

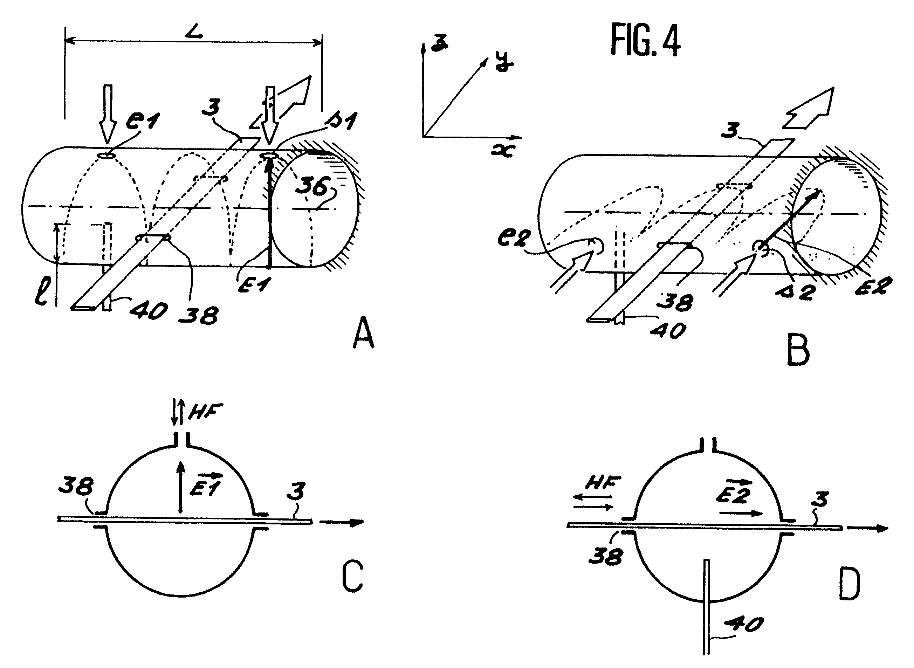

Conformément à l'invention, la cavité 4 fonctionne toujours sur le mode de résonance $TE_{113}$. Les entrées e1 et e2 ainsi que les sorties s1 et s2 sont placées, comme illustré sur les parties A et B de la figure 4, en un maximum du champ électrique du mode résonnant, et de part et d'autre du passage 38, soit à 1/6 de la longueur L de la cavité.

Par ailleurs, la cavité est pourvue d'un filtre de mode 40 (figures 3 et 4) constitué par un fil de cuivre ou d'argent rectiligne de 1 mm de diamètre dont la longueur de pénétration l à l'intérieur de la cavité 4 est égale au rayon de la cavité. Ce filtre de mode est orienté selon la direction z du repère xyz et est placé en un maximum du champ électrique résonnant, c'est-à-dire soit en regard de l'entrée e1 soit en regard de la sortie s1.

Lorsque la fibre 3 à étudier est conductrice, par exemple en carbone ou en kevlar, les entrée e1 et sortie s1 sont couplées respectivement à la source micro-onde 2 et au détecteur 16. La fibre conductrice 3, comme indiqué sur les parties A et C de la figure 4, se trouve alors orientée perpendiculairement à la composante $\vec{E1}$ du champ électrique du mode résonnant $TE_{113}$, orientée selon l'axe z, la composante $\vec{E2}$ de ce champ orientée selon la direction y étant alors absorbée par la fibre conductrice 3.

Dans le cas d'une fibre non conductrice, les entrée e2 et sortie s2 sont utilisées. La fibre non conductrice, comme indiqué sur les parties B et D e la figure 4, se trouve alors orientée parallèlement à la composante $\vec{E2}$ du champ électrique du mode de résonance $TE_{113}$. La polarisation indésirable $\vec{E1}$ du champ électrique est alors éliminée de la cavité à l'aide du filtre de mode 40.

La figure 5 donne les courbes de résonance de la cavité micro-onde. La courbe I correspond à la résonance de la cavité à vide, la fréquence de résonance à vide Fo étant voisine de 9450 MHz, et la courbe II décalée par rapport à la courbe I correspond à la résonance de la cavité perturbée par l'introduction à l'intérieur de la cavité d'une fibre dont on désire mesurer le taux d'imprégnation par une résine. Le décalage en fréquence dépend du type de fibres et des conditions d'utilisation.

La fréquence de résonance F1 de la cavité perturbée ainsi que la puissance micro-onde P1(t) transmise par la cavité sont directement liées à la nature de la fibre (conductrice ou non conductrice) ainsi qu'à son taux d'imprégnation par la résine. Les relations existant entre F1, P1(t) et le taux d'imprégnation T des fibres sont données dans le brevet FR-2556470.

Selon l'invention, la stabilité en fréquence de la source micro-onde 2 est obtenue en modulant la fréquence d'émission de cette source autour de la fréquence F1 sur un intervalle de $\Delta 2F$ qui doit être grand devant la largeur à mi-hauteur $\Delta 1F$ du pic de résonance de la cavité perturbée, et au moins cinq fois plus grand. Le coefficient $\Delta 1F$ est défini par le rapport F1/Q1, Q1 étant le coefficient de qualité de la cavité perturbée.

Pour répondre à des besoins industriels de fabrication de matériaux composites à l'aide de fibres pré-imprégnées de résine, il a été fabriqué un dispositif capable de mesures mixtes du taux d'imprégnation de résine sur des fibres de carbone et des fibres en kevlar parallélépipédiques de 3 à 4 mm de large sur 0,5 mm d'épaisseur.

Les fibres 3 pré-imprégnées défilaient à une vitesse continue de 4 m par minute.

Cette vitesse de défilement n'influençant pas le résultat de la mesure, on peut utiliser le dispositif de l'invention avec des vitesses nettement plus grandes par exemple allant jusqu'à 60 m/min, moyennant de maîtriser le positionnement de la fibre.

La modulation de la tension d'alimentation de la source 2 a été effectuée avec une fréquence de 150 Hz appliquée sur le varactor de façon que la source 2 fonctionne sur un intervalle $\Delta 1 F$ de 50 MHz, non critique, autour de la fréquence de résonance F1 de la cavité voisine de 9400 MHz. La cavité réalisée en UZ10 présente un diamètre de 27 mm et une longueur L de 65 mm. Son coefficient de qualité à vide est de l'ordre de 1000.

Des moyens de tension des fibres étaient prévus pour stabiliser la position de la fibre dans la cavité.

Le système de traitement selon l'invention a permis de visualiser une valeur moyenne de 16 mesures de $\overline{Vm}$ ou plus exactement de $\overline{V'M}$, correspondant au défilement à travers la cavité de 1 m de fibre imprégnée.

Cette mesure moyenne sur 16 valeurs a permis de faire la comparaison avec une mesure du taux d'imprégnation T effectuée par pesée sur une même longueur de fibre (1 à 10 mètres par exemple). Cette corrélation a permis de réaliser l'étalonnage du système de traitement et de constituer un tableau de comparaison qui a été mémorisé dans une mémoire REPROM.

Ce système a permis de mesurer des taux d'imprégnation de résine de 20% à 40% avec une précision de plus ou moins 1% sur des fibres de carbone et de plus ou moins 0,5% sur des fibres de Kevlar.

Suivant le type d'application utilisé, le principe de la mesure, l'ensemble source-détection et le système de traitement de mesure restent les mêmes, aux fréquences d'excitation et de résonance prés de la cavité. Seules les dimensions de la cavité hyperfréquence ainsi que la forme du passage 38 sont modifiées en fonction de la forme ou de la nature du produit à contrôler.

Les fréquences d'excitation de la cavité peuvent être des bandes S, X ou même Ku ; la bande S correspond à des fréquences allant de 2 à 4 GHz et la bande Ku à des fréquences allant de 12,4 à 18 GHz.

## Revendications

1. Dispositif de mesure en continu du taux d'imprégnation par une substance quelconque d'une fibre (3), comportant une source micro-onde (2), une cavité résonnante (4) à section circulaire excitée selon un mode résonnant $TE_{11n}$, avec n un nombre impair supérieur à 1, et susceptible d'être couplée à la source micro-onde via un premier guide d'onde (6), la cavité étant pourvue d'un axe de symétrie (36) parallèle à une première direction (x) et d'un passage (38) pour la fibre, traversant la cavité (4) en son milieu et orienté parallèlement à une seconde direction (y) perpendiculaire à la première direction (x), un détecteur (16) de la puissance (P1(t)) micro-onde transmise par la cavité (4), susceptible d'être couplé à cette dernière via un second guide d'onde (18) et transformant cette puissance en un signal électrique, des moyens de traitement (20, 22, 24, 26, 28) du signal électrique pour en déduire le taux d'imprégnation et des moyens d'affichage (32) du taux d'imprégnation, caractérisé en ce que la cavité (4) qu'il comporte (a) une première entrée (e1) et une première sortie (s1) des micro-ondes, orientées parallèlement à une troisième direction (z) perpendiculaire aux première et seconde directions (x, y), ces premières entrée et sortie (e1, s1) étant destinées à être connectées respectivement aux premier (6) et second (18) guides lorsque la fibre (3) est conductrice, afin que la première composante ($\overrightarrow{E1}$) du champ électrique du mode résonnant $TE_{11n}$, orientée selon la troisième direction (z), soit perpendiculaire à la fibre (3) conductrice, (b) une seconde entrée (e2) et une seconde sortie (s2) des micro-ondes, orientées parallèlement à la seconde direction (y), ces seconde entrée et sortie étant destinées à être connectées respectivement aux premier (16) et second (18) guides lorsque la fibre (3) est non conductrice, afin que la seconde composante ($\overrightarrow{E2}$) du champ électrique du mode résonnant $TE_{11n}$, orientée selon la seconde direction (x), soit parallèle à la fibre non conductrice, et (c) un filtre de mode (40) pour éliminer de la cavité résonnante (4) ladite première composante ($\overrightarrow{E1}$) du champ électrique lorsque la fibre (3) est non conductrice.

2. Dispositif selon la revendication 1, caractérisé en ce que le filtre de mode (40) est constitué d'un fil conducteur rigide pénétrant dans la cavité (4) et orienté selon la troisième direction (z).

3. Dispositif selon la revendication 1 ou 2, caractérisé en ce que le filtre de mode (40) est situé à un ventre de ladite première composante ($\overrightarrow{E1}$) du champ électrique.

4. Dispositif selon l'une quelconque des revendications 1 à 3, caractérisé en ce que la pénétration du filtre de mode (40) dans la cavité (4) est voisine du rayon de la cavité.

5. Dispositif selon l'une quelconque des revendications 1 à 4, caractérisé en ce que la surface externe du filtre de mode (40) est revêtue d'un métal bon conducteur de l'électricité.

6. Dispositif selon l'une quelconque des revendications 1 à 5, caractérisé en ce que les parois de la cavité (4) sont pourvues d'un métal bon conducteur de l'électricité.

7. Dispositif selon l'une quelconque des revendications 1 à 6, caractérisé en ce que des moyens de stabilisation (5) en fréquence de la source micro-onde (2) sont prévus.

8. Dispositif selon la revendication 7, caractérisé en ce que les moyens de stabilisation (5) comportent un générateur de tension en dents de scie modulant la fréquence de la source (2) autour de la fréquence de résonance (F1) de la cavité (4) perturbée sur un intervalle de fréquence très grand devant la largeur à mi-hauteur ($\Delta 1F$) du pic de la courbe de résonance donnant la puissance micro-onde (P1(t)) transmise par la cavité perturbée en fonction de la fréquence d'excitation de la cavité.

9. Dispositif selon l'une quelconque des revendications 1 à 8, caractérisé en ce que les moyens de traitement comportent un circuit électronique (20) transformant le signal émis par le détecteur (18) en un signal continu moyen, un amplificateur (22) pour amplifier ledit signal continu moyen, un convertisseur analogique-digital (24) pour convertir le signal amplifié, et des moyens (26, 28) pour transformer le signal digital issu du convertisseur en un taux d'imprégnation.

## Patentansprüche

1. Vorrichtung zum stetigen Messen der Imprägnierungsrate einer Faser (3) mit einer beliebigen Substanz mit einer Mikrowellenquelle (2), einem Resonanzhohlraum (4) mit einem kreisförmigen Querschnitt, der entsprechend einer $TE_{11n}$-Mode angeregt wird, wobei n eine ungerade Zahl größer als 1 ist, und der geeignet ist, an die Mikrowellenquelle über einen ersten Wellenleiter (6) gekoppelt zu werden, wobei der Hohlraum mit einer Symmetrieachse (36) parallel zu einer ersten Richtung (x) und einem Durchlaß (38) für die Faser, der den Hohlraum (4) in seiner Mitte durchquert und parallel zu einer zweiten Richtung (y) senkrecht zur ersten Richtung (x) ausgerichtet ist, versehen ist, einem Detektor (16) für die Mikrowellenleistung (P1(t)), die über den Hohlraum (4) übertragen wird, der geeignet ist, mit dem letzteren über einen zweiten Wellenleiter (18) gekoppelt zu werden, und diese Leistung in ein elektrisches Signal umwandelt, einer Vorrichtung (20, 22, 24, 16, 18) zur Verarbeitung des elektrischen Signals, um daraus den Imprägnierungsgrad abzuleiten, und einer Vorrichtung (32) zum Anzeigen des Imprägnierungsgrads, dadurch gekennzeichnet, daß der Hohlraum (4) aufweist : (a) einen ersten Eingang (e1) und einen ersten Ausgang (s1) für Mikrowellen, die parallel zu einer dritten Richtung (z) senkrecht zu den ersten und zweiten Richtungen (x, y) ausgerichtet sind, wobei dieser erst Eingang und Ausgang (e1, s1) dazu bestimmt sind, jeweils mit dem ersten (6) und zweiten (18) Leiter verbunden zu werden, wenn die Faser (3) leitend ist, Damit die erste Komponente (E1) des elek-

trischen Feldes der Resonanzmode $TE_{11n}$, die entlang der dritten Richtung (z) orientiert ist, senkrecht zur leitenden Faser (3) ist, (b) einen zweiten Eingang (e2) und einen zweiten Ausgang (s2) für Mikrowellen, die parallel zur zweiten Richtung (y) ausgerichtet sind, wobei dieser zweite Eingang und Ausgang (e2, s2) dazu bestimmt sind, jeweils mit dem ersten (6) und zweiten (18) Leiter verbunden zu werden, wenn die Faser (3) nichtleitend ist, damit die zweite Komponente $(\overrightarrow{E2})$ des elektrischen Feldes der Resonanzmode $TE_{11n}$, die entlang der ersten Richtung (x) orientiert ist, parallel zur nichtleitenden Faser ist, und (c) ein Modenfilter (40), um aus dem Resonanzhohlraum (4) die erste Komponente $(\overrightarrow{E1})$ des elektrischen Feldes zu eliminieren, wenn die Faser (3) nichtleitend ist.

2. Vorrichtung nach Anspruch 1, dadurch gekennzeichnet, daß das Modenfilter (40) aus einem steifen Leiterdraht besteht, der in den Hohlraum (4) eindringt und entlang der dritten Richtung (z) ausgerichtet ist.

3. Vorrichtung nach Anspruch 1 oder 2, dadurch gekennzeichnet, daß das Modenfilter in einem Bauch der ersten KomKomponente $(\overrightarrow{E1})$ des elektrischen Feldes angeordnet ist.

4. Vorrichtung nach einem der Ansprüche 1 bis 3, dadurch gekennzeichnet, daß das Eindringen des Modenfilters (40) in den Hohlraum (4) in der Nähe des Halbmessers des Hohlraums ist.

5. Vorrichtung nach einem der Ansprüche 1 bis 4, dadurch gekennzeichnet, daß die äußere Oberfläche des Modenfilters (40) im Hohlraum (4) mit einem gut die Elektrizität leitenden Metall überzogen ist.

6. Vorrichtung nach einem der Ansprüche 1 bis 5, dadurch gekennzeichnet, daß die Wände des Hohlraums (4) mit einem gut die Elektrizität leitenden Metall versehen sind.

7. Vorrichtung nach einem der Ansprüche 1 bis 6, dadurch gekennzeichnet, daß eine Frequenzstabilisierungsvorrichtung (5) für die Mikrowellenquelle (2) vorgesehen ist.

8. Vorrichtung nach Anspruch 7, dadurch gekennzeichnet, daß die Stabilisierungsvorrichtung (5) einen Sägezahnspannungsgenerator aufweist, der die Frequenz der Quelle (2) um die Resonanzfrequenz (F1) des gestörten Hohlraums (4) in einem sehr großen Frequenzintervall verglichen mit der halben Höhe (Δ1F) der Spitze der Resonanzkurve moduliert, was die von dem gestörten Hohlraum transmittierte Mikrowellenleistung (P1(t)) als Funktion der Anregungsfrequenz des Hohlraums ergibt.

9. Vorrichtung nach einem der Ansprüche 1 bis 8, dadurch gekennzeichnet, daß die Verarbeitungsvorrichtung einen elektronischen Schaltkreis (20), der das von dem Detektor (18) emittierte Signal in ein mittleres, stetiges Signal umwandelt, einen Verstärker (22) zum Verstärken des mittleren, stetigen Signals, einen Analog/Digitalwandler (24) zum Umwandeln des verstärkten Signals und eine Vorrichtung (26, 28) zum Umwandeln des von dem Wandler erhaltenen Signals in eine Imprägnierungsrate aufweist.

## Claims

1. Device for the continuous measurement of the impregnation rate by a random substance of fibre (3), having a microwave source (2), a resonant cavity (4) which has a circular section excited according to a resonant mode $TE_{11n}$, with n an uneven number greater than 1, and can be coupled to the microwave source via a first waveguide (6), the cavity having an axis of symmetry (36) parallel to a first direction (x) and a passage (38) for the fibre, traversing the cavity in its centre and oriented parallel to a second direction (6) perpendicular to the first direction, a detector (16) of the microwave power (P1(t)) transmitted by the cavity (4) and which can be coupled to the latter via a second waveguide (18) and transforming said power into an electric signal, means (20, 22, 24, 26, 28) for processing the electric signal in order to deduce therefrom the impregnation rate and means (32) for displaying the impregnation rate, characterized in that the cavity (4) has (a) a first input (e1) and a first output (s1) for microwaves, oriented parallel to a third direction (z) perpendicular to the first and second directions (x, y), said first input and output (e1, s1) being respectively connected to the first (16) and second (18) guides when the fibre (3) is conductive, so that the first component $(\overrightarrow{E1})$ of the electric field of resonant mode $TE_{11n}$, oriented in the third direction (z) is perpendicular to the conductive fibre (3), (b) a second input (e2) and a second output (s2) for microwaves, oriented parallel to the second direction (y), said second input and output being respectively connected to the first (16) and second (18) guides when the fibre (3) is non-conductive, so that the second component $(\overrightarrow{E2})$ of the electric field of the resonant mode $TE_{11n}$, oriented in the second direction (x) is parallel to the non conductive fibre and (c) a mode filter (40) for eliminating from the resonant cavity (4) said first component $(\overrightarrow{E1})$ of the electric field when the fibre (3) is non-conductive.

2. Device according to claim 1, characterized in that the mode filter (40) is constituted by a rigid conductive wire penetrating cavity (4) and oriented in the third direction (z).

3. Device according to claims 1 or 2, characterized in that the mode filter (40) is located at an antinode of first component $(\overrightarrow{E1})$ of the electric field.

4. Device according to any one of the claims 1 to 3, characterized in that the penetration of mode filter (40) into cavity (4) is close to the radius of the cavity.

5. Device according to any one of the claims 1 to 4, characterized in that the outer surface of mode filter (40) is coated with a good electricity conducting metal.

6. Device according to any one of the claims 1 to 5, characterized in that the walls of the cavity (4) are provided with a good electricity conducting metal.

7. Device according to any one of the claims 1 to 6, characterized in that frequency stabilization means (5) for microwave source (2) are provided.

8. Device according to claim 7, characterized in that the stabilization means (5) incorporate a sawtooth voltage generator modulating the frequency of source (2) aboutt the resonant frequency (F1) of the distrubed cavity (4) over a frequency range which is large compared with the mid-height width (Δ1F) of the peak of the resonance curve giving the microwave power (P1(t)) transmitted by the disturbed cavity as a function of the exciting frequency of the cavity.

9. Device according to any one of the claims 1 to 8, characterized in that the processing means incorporate an electronic circuit (20) converting the signal emitted by detector (18) into a continuous mean signal, an amplifier (22) for amplifying said continuous mean signal, an analog-digital converter (24) for converting the amplified signal and means (26, 28) for converting the digital signal from the converter into an impregnation rate.

FIG. 1

EP 0 302 778 B1

# FIG. 5

# FIG. 2

# FIG. 3

EP 0 302 778 B1

FIG. 4

A

B

C

D

EP 0 302 778 B1